# EUROPÄISCHE PATENTSCHRIFT

(11) **EP 2 481 614 B1**
(45) Veröffentlichungstag und Bekanntmachung des Hinweises auf die Patenterteilung: **12.06.2013**
(21) Anmeldenummer: 12001084.8
(22) Anmeldetag: 20.05.2009
(51) Int. Cl.: B60G 21/055, B60G 17/016, F15B 13/02

(54) **Stromteilervorrichtungen und Versorgungseinrichtung unter Einsatz einer dahingehenden Stromteilervorrichtung**
Current divider devices and supply device using such a current divider
Dispositifs de répartition de courant et dispositif d'alimentation utilisant un dispositif de répartition de courant s'y encastrant

(30) Priorität: 05.06.2008 DE 102008026926
(43) Veröffentlichungstag der Anmeldung: 01.08.2012
(62) Teilanmeldung aus: 09757178.0
(73) Patentinhaber: Hydac Electronic GmbH, 66128 Saarbrücken (DE)
(72) Erfinder: Herold, Frank, 66129 Saarbrücken (DE); Casimir, Michael, 66333 Völklingen (DE); Remus, Kai, 66564 Ottweiler (DE); Thull, Daniel, 70599 Stuttgart (DE)
(74) Vertreter: Bartels & Partner

(56) Entgegenhaltungen:
- EP-A- 1 426 210
- WO-A-2004/085178
- DE-A1-102006 004 264
- US-A1- 2008 066 461

## Beschreibung

Die Erfindung betrifft Stromteilervorrichtungen mit mindestens einem Druckversorgungsanschluß und mindestens zwei Nutzanschlüssen und einem zumindest die jeweiligen Nutzanschlüsse ansteuerbaren Steuerkolben, der nach einem vorgebbaren Verhältnis den über den Druckversorgungsanschluß zuführbaren Volumenstrom zwischen den Nutzanschlüssen in der Art einer Druckwaage regelnd aufteilt, wobei im Versagensfall betreffend zumindest einen Nutzanschluß mittels einer Sicherheitseinrichtung unter Einsatz des Steuerkolbens für den jeweils verbleibenden Nutzanschluß eine Druckbegrenzung oder Druckabschaltung vorgesehen ist, wobei eine Ausnehmung des Steuerkolbens eine Verbindungsstelle zu dem Druckversorgungsanschluss aufweist. Die Erfindung betrifft weiter eine Versorgungseinrichtung unter Einsatz einer dahingehenden Stromteilervorrichtung.

Durch die DE 196 49 187 C2 ist eine Versorgungseinrichtung in der Art einer hydraulischen Stabilisierungseinrichtung für ein zweiachsiges Kraftfahrzeug bekannt mit einem für die Fahrzeug-Vorderachse und einem für die Fahrzeug-Hinterachse vorgesehenen hydraulischen Stellglied sowie mit jeweils einem zwischen einer Druckleitung und einer Tankleitung angeordneten Schaltventil, das derart einstellbar ist, dass die Druckleitung mit einer ersten Arbeitskammer und die Tankleitung mit einer zweiten Arbeitskammer eines jeweiligen hydraulischen Stellgliedes bzw. umgekehrt verbunden ist, sowie mit einem einstellbaren Druckbegrenzungsventil, das in einer Verbindungsleitung zwischen der der Vorderachse zugeordneten Druckleitung und der Tankleitung parallel zum Vorderachs-Schaltventil vorgesehen ist, und mit einem weiteren Druckregelventil, durch welches der in der Druckleitung des Hinterachs-Schaltventils herrschende Druck auf einen Wert eingestellt wird, der nicht höher als derjenige in der Vorderachs-Druckleitung ist.

Diese bekannte Lösung stellt zu jedem Zeitpunkt sicher, dass der Hydraulikdruck am Hinterachs-Stellglied nie größer wird als derjenige am Vorderachs-Stellglied, wobei der Hydraulikdruck am Hinterachs-Stellglied nahezu beliebig einstellbar ist. Die bekannte Lösung mit ihren einzelnen Steuerkreisen ist in der Art einer Reihenschaltung aufgebaut und da der Steuerkreis für die Vorderachse immer einen höheren Druck aufweist als der Steuerkreis für die Hinterachse, sind bezogen auf die gewünschte Fahrstabilität bei der bekannten Lösung auch erhöhten Sicherheitsanforderungen Genüge getan.

Neben dieser bekannten Reihenschaltungslösung sind im Stand der Technik frei auf dem Markt erhältliche Stabilisierungseinrichtungen bekannt, bei denen der jeweilige Steuerkreis für die Vorder- und die Hinterachse mit einer eigenen Versorgungseinheit in Form einer zuordenbaren hydraulischen Pumpe versehen ist. Die jeweils für den Vorderachskreis sowie für den Hinterachskreis eingesetzte Hydraulikpumpe wird mit der jeweils anderen Hydraulikpumpe als Tandempumpe ausgebildet, d.h. mit nur einem Antriebsmotor (Elektromotor, Verbrennungsmotor, etc.) werden gleichzeitig und gleichsinnig beide hydraulischen Pumpen angesteuert. Mit zunehmender Drehzahl der Tandempumpe nimmt auch deren zu fördernder Volumenstrom zu, der entsprechend der geometrischen Fördervolumina in den jeweiligen Steuerkreis von Vorder- und Hinterachse eingespeist wird. Bei einer Drehzahländerung an der hydraulischen Versorgungseinheit kommt es also aufgrund der Tandempumpenanordnung zu einer entsprechenden Änderung des Volumenstroms im vorgebbaren Mengenaufteilungsverhältnis zwischen den beiden Steuerkreisen. Bei der dahingehenden Lösung ist mithin sicherzustellen, dass der Steuerkreis mit der Hinterachse immer einen ausreichenden Volumenstrom bekommt, so dass das angesprochene Mengenaufteilungsverhältnis zunächst bei minimaler Pumpenleistung der Tandempumpe festzulegen ist. Ebenso wird bei höheren Pumpenleistungen aufgrund der Drehzahlabhängigkeit der Tandempumpe der überschüssige Volumenstrom prozentual ebenso aufgeteilt und dann in dahingehend vorgegebenem Verhältnis gleichermaßen an den jeweiligen Steuerkreis von Vorder- und Hinterachse weitergegeben. Um ein stabiles System zu erhalten und mithin um ungewollt Schwingungen durch Rückkopplung zu vermeiden, bedarf es einer sehr guten Auslegung des Gesamtsystems unter Einbezug der drehzahlabhängigen Tandempumpe, die im übrigen teuer in der Anschaffung und im Betrieb ist.

Durch die gattungsbildende DE 10 2006 004 264 A1 ist wiederum eine hydraulische Versorgungseinrichtung in der Art einer Stabilisierungseinrichtung für ein mehrachsiges Fahrzeug bekannt mit je einem für eine Vorder- und eine Hinterachse vorgesehenen hydraulischen Steuerkreis, die in der Art einer Parallelschaltung ausgebildet sind, wobei jeweils ein Stellglied für die Ansteuerung der jeweiligen Achse vorgesehen ist. Ferner ist eine hydraulische Versorgungseinheit vorgesehen mit variablem Leistungsvermögen, wobei abhängig vom Leistungsvermögen der angesprochenen Versorgungseinheit zur Ansteuerung der genannten Achsen vorgebbare Mengen eines Volumenstromes zugeteilt werden. Als Regeleinrichtung hierfür dient ein Stromregelventil, das den Volumenstrom zwischen den hydraulischen Verbrauchern für die Achsen aufteilt, wobei bei einem höheren Leistungsvermögen der Versorgungseinheit der damit einhergehende Überschuß an Volumenstrom an eine Achse abgegeben wird, die ungeregelt ist. Mit dieser bekannten Lösung tritt an die Stelle der sonst vorgeschlagenen Mengenaufteilung mit vorgebbaren prozentualen Volumenverhältnissen eine definierte Regelung und im Überschußfall an Volumenstrom bleibt dieser an der mittels des Stromregelventils geregelten Achse konstant und der Überschußanteil gelangt an die jeweilige ungeregelte Achse, wodurch unter anderem erreicht ist, dass die gewünschte Wankstabilisierung an der nicht geregelten Achse vom Ansteuerverhalten her höher dynamisch ausgelegt ist.

Die insoweit bei den bekannten Anwendungen zum Einsatz kommenden Stromteilervorrichtungen stellen in der Regel ein Ventil dar, das den zulaufenden Volumenstrom nach dem Drosselprinzip in zwei vorausbestimmte Teilströme teilt. Da der Steuerkolben der Stromteilervorrichtung in der Art einer Druckwaage wirkt, gilt, dass auch weitgehend für unterschiedliche Drücke in den Teilströmen das vorgebbare Volumenstromverhältnis beibehalten wird. Sofern solche Stromteilervorrichtungen für den genannten Anwendungsbereich zum Einsatz kommen, wie Wank- und Nickstabilisierung von Fahrzeugachsen, oder bei vergleichbarer Aufgabenstellung für Federungssysteme, wie Kabinenfederungen, sind an die Funktionssicherheit dahingehender Stromteilervorrichtungen erhöhte Anforderungen zu stellen. Dies gilt insbesondere für einen Versagensfall, bei dem ein hydraulischer Versorgungskreis eines der vorgesehenen Nutzanschlüsse der Stromteilervorrichtung blockiert ist, was auch der Fall sein kann, wenn ein nachgeschaltetes Ventil im hydraulischen Steuerkreis, beispielsweise aufgrund eines elektrischen Versagens, in einer den jeweiligen Fluidkreis sperrenden Blockierstellung verbleibt.

Dies vorausgeschickt stellt sich die Erfindung die Aufgabe, die bekannten Stromteilervorrichtungslösungen dahingehend weiter zu verbessern, dass im Versagensfall erhöhten Sicherheitsanforderungen Rechnung getragen wird. Eine dahingehende Aufgabe lösen Stromteilervorrichtungen mit den Merkmalen der Patentansprüche 1 oder 9 sowie eine Versorgungseinrichtung unter Einsatz einer dahingehenden Stromteilervorrichtung gemäß der Merkmalsausgestaltung des Anspruches 10.

Dadurch, dass im Versagensfall betreffend zumindest einen Nutzanschluß mittels einer Sicherheitseinrichtung unter Einsatz des Steuerkolbens für den jeweils verbleibenden Nutzanschluß eine Druckbegrenzung oder Druckabschaltung verwirklicht ist, ist sichergestellt, dass auch im Fall einer Blockade des einen Nutzanschlusses die permanent über den Druckversorgungsanschluß erfolgende Fluidweiterversorgung nicht dazu führen kann, dass sich eine Situation einstellt, bei der bedingt durch die Überversorgung Druckerhöhungen oder Druckspitzen entstehen können, die zu einem Versagen von hydraulischen Komponenten und/oder dem Aufreißen entsprechender Fluidzufuhrleitungen im verbleibenden hydraulischen Kreis führen.

Bei der ersten Lösung der Aufgabe weist eine Ausnehmung des Steuerkolbens eine Verbindungsstelle zu dem Druckversorgungsanschluss und zusätzlich zu der Verbindungsstelle drei Querbohrungsreihen auf.

Vorzugsweise weist hierfür die Sicherheitseinrichtung der Stromteilervorrichtung mindestens einen Bypass auf, der im Versagensfall mittels des Steuerkolbens zunehmend eine Fluidverbindung zwischen dem Druckversorgungsanschluß und dem jeweils verbleibenden Nutzanschluß herstellt. Ist im Versagensfall einer der Nutzanschlüsse vom möglichen Fluiddurchfluß her teilweise oder ganz blockiert, liefert der Druckversorgungsanschluß der Stromteilervorrichtung nach wie vor im vorgegebenen Verhältnis die Volumenmengen an die einzelnen über die Nutzanschlüsse angeschlossenen Verbraucher, was zu einem Druckanstieg im geschlossenen hydraulischen Kreis führt. Dieser Druckanstieg wiederum kann zu schwerwiegenden Versagensfällen im hydraulischen Kreis und bei den hydraulischen Komponenten führen, die insbesondere in der Versorgungslinie zwischen der eigentlichen Druckversorgung und dem hydraulischen Verbraucher zu suchen sind. Um dem zu begegnen, ist über den jeweiligen Bypass sichergestellt, dass der im Druckversorgungsanschluß anstehende Versorgungsdruck unmittelbar dem verbleibenden Nutzanschluß zugeführt wird, der dann in der Art einer Gegenreaktion der Versorgungsmenge entgegenwirkt, die auf üblichem Wege über den Steuerkolben dem verbleibenden Nutzanschluß nach wie vor zugeführt wird. Aufgrund des sich hierdurch einstellenden Differenzdruckes am Steuerkolben regelt dieser den von der Störung betroffenen Nutzanschluß ab, d.h. die über den Steuerkolben zugeführte Fluidmenge wird zusehends vom Zufluß in diesen Nutzanschluß abgesperrt.

Je nach Ausgestaltung der Stromteilervorrichtung läßt sich dergestalt eine Druckabschaltung realisieren oder eine Druckminderung auf nicht schädliche Minimaldruckwerte, um insoweit noch eine Grundversorgung des verbleibenden Nutzanschlusses zu erreichen. In jedem Fall wird der Bypass derart geschaltet, dass für die bewegbaren Ventilkomponenten, hier in Form des Ventilkolbens, eine "negative Überdeckung" gegeben ist, die sich steuerungstechnisch gut handhaben läßt und insbesondere nicht zur hydraulischen Instabilität im jeweils betroffenen Kreis führt. Auch läßt sich die Sicherheitseinrichtung derart konzipieren, dass etwaige Unsicherheiten betreffend die Fertigungstoleranzen bezüglich der Ventilkomponenten der Stromteilervorrichtung mit Sicherheit vermieden sind.

Die zweite Lösung der Aufgabe besteht in einer Stromteilervorrichtung mit mindestens einem Druckversorgungsanschluß und mindestens zwei Nutzanschlüssen und einem zumindest die jeweiligen Nutzanschlüsse ansteuerbaren Steuerkolben, der nach einem vorgebbaren Verhältnis den über den Druckversorgungsanschluß zuführbaren Volumenstrom zwischen den Nutzanschlüssen in der Art einer Druckwaage regelnd aufteilt, wobei im Versagensfall betreffend zumindest einen Nutzanschluß mittels einer Sicherheitseinrichtung unter Einsatz des Steuerkolbens für den jeweils verbleibenden Nutzanschluß eine Druckbegrenzung oder Druckabschaltung vorgesehen ist, wobei eine variable Regelblende in einen konstanten Teil, vorzugsweise gebildet durch ein Zwischengehäuseteil, das Querbohrungen aufweist, und in einen variablen Teil, vorzugsweise gebildet aus einer Querbohrungsreihe im Steuerkolben, aufgeteilt ist.

Die erfindungsgemäße Stromteilervorrichtung läßt sich im Sinne des Anspruches 10 bevorzugt für hydraulische Versorgungseinrichtungen einsetzen, wie Wank- und Nickstabilisierungseinrichtungen, betreffend Kraftfahrzeugachsen, aber auch für Federungssysteme, wie sie bei Bedienerkabinen von Arbeitsmaschinen, Lastkraftwagen etc. Verwendung finden. Die erfindungsgemäße Stromteilervorrichtung ist jedoch auf dahingehende Anwendungen nicht eingeschränkt und kann immer dort eingesetzt werden, wo für einen nachgeschalteten hydraulischen Verbraucher einer Stromteilervorrichtung ein Versagensfall droht und keine sonstige Druckabsicherung im hydraulischen Kreis, wie beispielsweise ein Druckbegrenzungsventil, vorgesehen ist.

Im folgenden werden verschiedene Ausführungsbeispiele näher erläutert. Dabei zeigen in prinzipieller und nicht maßstäblicher Darstellung die
- Fig.1: in der Art eines hydraulischen Schaltplans eine Versorgungseinrichtung für die Wankstabilisierung zweier Achsen eines Kraftfahrzeuges unter Einsatz einer Stromteilervorrichtung;
- Fig.2: in der Art eines Längsschnittes eine Stromteilervorrichtung nach dem Stand der Technik;
- Fig.3 bis 5: entsprechende Darstellungen zu der Fig.2, nunmehr bezogen auf die erfindungsgemäße Lösung; dargestellt in einzelnen Regelpositionen zur Realisierung einer Druckabsenkungsfunktion;
- Fig.6: wiederum in der Art eines Längsschnittes die Ausführungslösung nach den Fig.3 bis 5 in sog. Cartridge- oder Patronenbauweise;
- Fig.7 und 8: gleichfalls in der Art eines Längsschnittes gegenüber der Lösung nach den Fig.3 bis 6, jedoch zur Realisierung einer Druckbegrenzungsfunktion ausgebildete Stromteilervorrichtungen;
- Fig.9: eine besonders bevorzugte Ausführungsform in Anlehnung zu einer Lösung nach den Fig.3 bis 5 in vergleichbarer Darstellung.

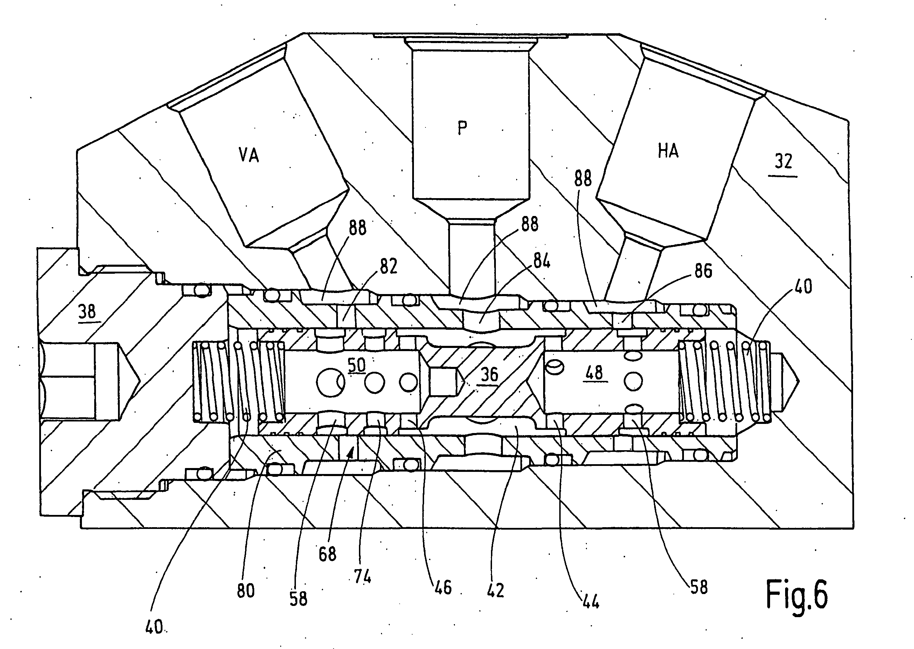

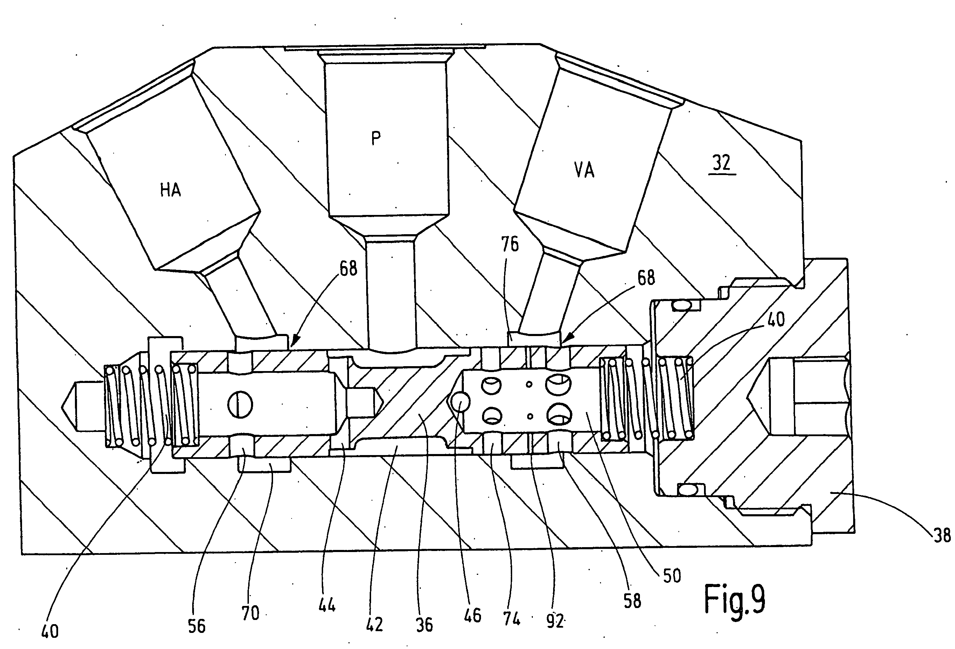

Lediglich die Figuren 6 und 9 stellen erfindungsgemäße Ausführungsformen dar. Die übrigen Figuren dienen der Erläuterung des Hintergrundes der Erfindung.

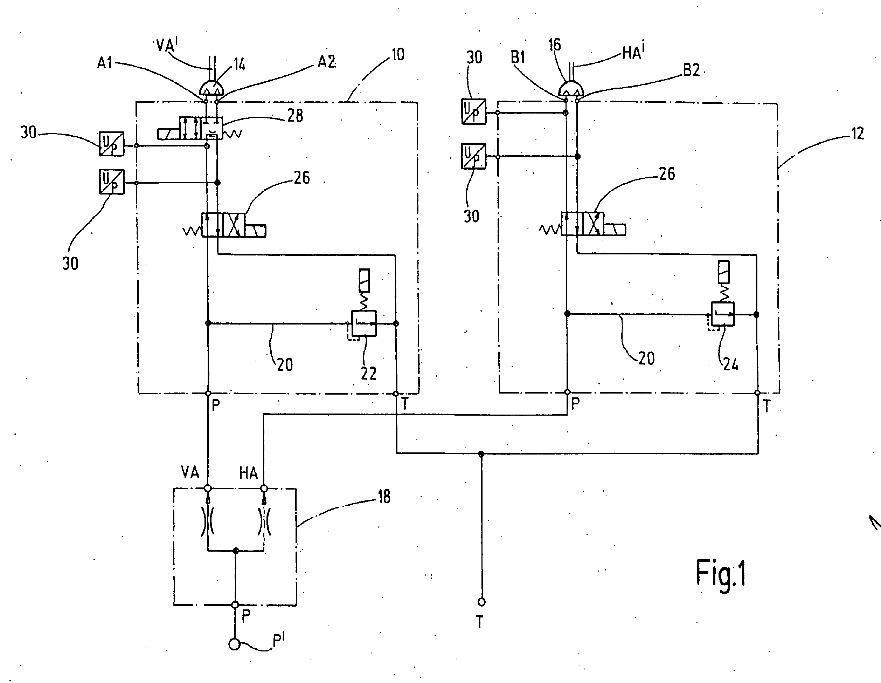

Die hydraulische Versorgungseinrichtung nach der Fig.1 dient als Stabilisierungseinrichtung für ein mehrachsiges, insbesondere zweiachsiges Kraftfahrzeug üblicher Bauart. Die Versorgungseinrichtung weist einen hydraulischen Steuerkreis 10 für die Vorderachse VA' eines Fahrzeuges auf sowie einen hydraulischen Steuerkreis 12 für die Hinterachse HA' desselben. Die beiden Steuerkreise 10,12 sind in der Art einer Parallelschaltung miteinander verschaltet und an jeden Steuerkreis 10,12 sind separate Stellglieder 14,16 angeschlossen; einmal für die Vorderachse VA', einmal für die Hinterachse HAʹ. Die zum Einsatz kommenden Stellglieder 14,16 können in der Art hydraulischer Stellmotoren ausgebildet sein, aber auch aus üblichen Aktuatoren oder sonstigen Stellmitteln, die für die dahingehende Anwendungsaufgabe geeignet sind, bestehen.

Ferner sind die beiden Steuerkreise 10,12 über einen Druckversorgungsanschluß P an eine Druckversorgung P' angeschlossen sowie an einen Tank T. Die Druckversorgung P' weist eine übliche, nicht näher dargestellte Hydropumpe auf, die drehzahlabhängig von einem Motor, beispielsweise einem Kraftfahrzeug-Dieselmotor oder Teilen desselben, angetrieben wird, so dass die hydraulische Versorgung auf der Pumpenausgangsseite in Abhängigkeit der Drehzahl des Motors über ein variables Leistungsvermögen verfügt.

Ferner ist in der Fig.1 zur Ansteuerung der beiden Steuerkreise 10,12 ein Stromteilerblock 18 vorhanden, der die Stromteilervorrichtung beinhaltet. Die Stromteilervorrichtung des Stromteilerblockes 18, die im nachfolgenden noch näher erläutert werden wird, erlaubt in Abhängigkeit des Leistungsvermögens der Druckversorgung P' eine definiert vorgegebene Aufteilung des Fluidvolumens auf die beiden Steuerkreise 10,12 für die Vorderachse VA' bzw. Hinterachse HA'. Eine üblich gewählte Aufteilung ist beispielsweise, 40 % des Volumenstromes an die Hinterachse HA' weiterzuleiten und 60 % für die Vorderachse VA' vorzusehen. Die jeweils gewählten Ansteuerdrücke in den Steuerkreisen 10,12 können insoweit gleichfalls unterschiedlich sein.

Wie des weiteren die Schaltungsdarstellung nach der Fig.1 zeigt, ist in einem Nebenzweig 20 eines jeden Steuerkreises 10, 12 ein mittels eines Magneten ansteuerbares Proportional-Druckbegrenzungsventil 22,24 geschaltet. In eine jede Zu- und Ablaufleitung A1,A2; B1,B2 eines jeden Stellgliedes 14,16, die in Richtung der Druckversorgung P' sowie zum Tank T eines jeden Steuerkreises 10,12 ausmünden, sind Schaltventile angeordnet, insbesondere in Form von ansteuerbaren 4/2-Wege-Ventilen 26. Darüber hinaus ist für die Vorderachse VA' zwischen dem Stellglied 14 und dem 4/2-Wege-Ventil 26 ein weiteres Schaltventil 28, insbesondere in Form eines 4/2-Wege-Ventils, geschaltet, das in seiner in der Fig.1 gezeigten Stellung die Anschlüsse A1,A2 des Stellgliedes 14 absperrt und ansonsten eine fluidführende Verbindung über eine interne Umlenkleitung zwischen der Druckversorgung P' und dem Tank T des Steuerkreises 10 herstellt.

In der anderen betätigten Schaltstellung wird insoweit eine fluidführende Verbindung zwischen Druckversorgung P', dem Anschluß A1 sowie dem Tank T und dem Anschluß A2 hergestellt unter der Bedingung, dass das Ventil 26 des Steuerkreises 10 seine in der Fig.1 dargestellte Durchlaßstellung einnimmt. Des weiteren ist zur Ansteuerung der Versorgungseinrichtung in jeden Zu- und Ablauf A1,A2; B1,B2 ein Druckwertaufnehmer 30 in Form eines produktüblichen Drucksensors geschaltet. Die als Regeleinrichtung eingesetzte Stromteilervorrichtung in Form des Stromteilerblockes 18 ist konstruktiv robust ausgelegt und insoweit betriebssicher im Gebrauch. Wartungsarbeiten treten regelmäßig bei dahingehenden Stromregelventilen nicht auf. Steigt nun vonseiten des Antriebsmotors drehzahlabhängig das Leistungsvermögen der Hydraulikpumpe an, können aufgrund der beschriebenen Ventilanordnung unter Einbezug des Stromteilerblockes 18 das zwischen der Vorderachse VA' und der Hinterachse HA' aufzuteilende Volumenstromverhältnis insoweit konstant gehalten werden und die Stellglieder 14,16 werden in dem Maße mit Fluid mit vorgegebener Menge und Druck versorgt, dass eine wirksame Wank- oder Nickstabilisierung erreicht ist. Die vorstehend beschriebene Versorgungseinrichtung braucht nicht auf die Nick- und Wankstabilisierung von Fahrzeugachsen eingeschränkt zu sein, sondern die aufgezeigten Stellglieder 14,16 können auch im Rahmen einer Fahrzeug- oder Kabinenfederung entsprechende Ansteuerungen vornehmen.

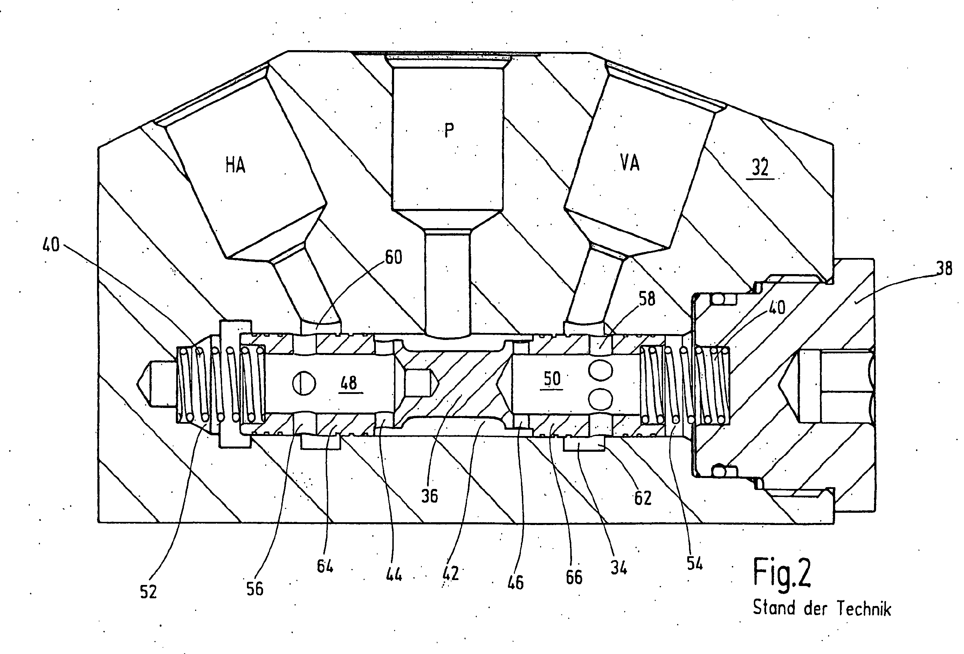

Im folgenden wird nun die Stromteilervorrichtung für den Stromteilerblock 18 nach der Fig.1 anhand der Fig.2ff näher erläutert, wobei die Fig.2 zur Darstellung des grundsätzlichen Aufbaues einer Stromteilervorrichtung noch eine Lösung nach dem Stand der Technik betrifft.

Die Stromteilervorrichtung weist einen Druckversorgungsanschluß P auf, der an die Druckversorgung P' anschließbar ist. Des weiteren sind die beiden Nutzanschlüsse HA und VA vorhanden, an die der jeweilige Steuerkreis 12 bzw. 10 für die Achsen VA' und HA' anschließbar ist. Sowohl der Druckversorgungsanschluß P als auch die beiden Nutzanschlüsse HA,VA sind in einem blockartigen Ventilgehäuse 32 der Stromteilervorrichtung angeordnet. Die gezeigten Anschlüsse P, HA und VA verjüngen sich in Blickrichtung auf die Fig.2 gesehen nach unten hin und münden in einen Ventilraum 34 aus, der in Blickrichtung auf die Fig.2 in horizontaler Richtung gesehen das Ventilgehäuse 32 durchgreift und in dem ein einstückig ausgebildeter Steuerkolben 36 längsverfahrbar geführt ist. Nach außen hin erweitert sich der Ventilraum 34, wobei der dahingehend erweiterte Raum gemäß der Darstellung nach der Fig.2 von einer Verschlußschraube 38 fluiddicht verschlossen ist. Die dahingehende Ausgestaltung ermöglicht den Einbau der Ventilkomponenten in das Ventilgehäuse 32 und im übrigen können im Versagensfall durch Entfernen der Verschlußschraube 38 die notwendigen Reparatur- und Austauscharbeiten veranlaßt werden.

Der Steuerkolben 36 stützt sich mit seinen beiden freien, einander gegenüberliegenden Enden an zwei Steuerfedern 40 ab, die in der Art von Zentrierfedern, vorzugsweise als Druckfedern ausgebildet sind. Die in Blickrichtung auf die Fig.2 gesehen linke Steuerfeder 40 stützt sich mit ihrem außen liegenden freien Ende an der Innenseite des Ventilgehäuses 32 ab und die gegenüberliegende rechte Steuerfeder 40 an der Verschlußschraube 38. Der Steuerkolben 36 weist an seiner Außenumfangsfläche in Längsrichtung gesehen eine umlaufende Ringausnehmung 42 auf und in jeder Verfahrstellung des Steuerkolbens 36 mündet der Druckversorgungsanschluß P in die dahingehende Ringausnehmung 42 ein. Über Querbohrungsreihen 44,46 üblicher Bauart, die wie Drosseln wirkend das Aufteilungsverhältnis bestimmen, sind die beiden hohlzylindrischen Ausnehmungen 48 bzw. 50 in der gezeigten Ausgangsstellung nach der Fig.2 in fluidführender Verbindung mit der Ringausnehmung 42 und mithin mit dem Druckversorgungsanschluß P. Die beiden Ausnehmungen 48,50 sind an ihren beiden stirnseitig benachbarten Enden durch den massiv ausgebildeten Steuerkolben 36 abgeschlossen und münden an ihrem jeweils gegenüberliegenden freien Ende in einen Steuerraum 52 bzw. 54 aus, in dem die jeweilige Steuerfeder 40 geführt ist. Eine weitere Fluidverbindungsmöglichkeit besteht über die weiteren Querbohrungsreihen 56 bzw. 58, die über Ringkanäle 60,62 in die Nutzanschlüsse HA und VA münden.

Auf jeder Seite des Steuerkolbens 36 ist die erste Querbohrungsreihe 44,46 von der zweiten Querbohrungsreihe 56,58 über Wandteile 64 und 66 derart voneinander beabstandet, dass in einer entsprechenden Verfahrstellung des Steuerkolbens 36 das jeweils zugeordnete Wandteil 64,66 den verjüngten Nutzanschluß HA bzw. VA vollständig fluiddicht abdecken könnte. Dies kann sich nachteilig auswirken, sofern in einem Versagensfall der Steuerkreis 12 für die Hinterachse HA' zumindest teilweise blockiert ist. Aufgrund der ausgeglichenen Druckwaagensituation betreffend den Steuerkolben 36 bleibt im dahingehenden Versagensfall die aufzuteilende Fluidmenge für Vorderachse VA' und Hinterachse HA' gleich; allein der Druck steigt insgesamt im hydraulischen Kreis an, was zu einer erhöhten Druckbelastung führen kann mit der möglichen Versagensfolge für die Fluidleitungen des hydraulischen Kreises 12 nebst den zugeordneten Ventilkomponenten einschließlich des Stellgliedes 16. Insgesamt kann die Situation im Versagensfall sogar zu einem Bersten von hydraulischen Teilen führen, was mit einem Fluidverlust einhergeht in Form der eingesetzten Hydraulikflüssigkeit, was wiederum gefährliche Fahrzustände für das Kraftfahrzeug nach sich ziehen kann.

Mit der nachfolgend aufgezeigten erfindungsgemäßen Stromteilervorrichtung lassen sich in der Art eines Fail-Safe-Betriebes dahingehende Versagensfälle sicher beherrschen. Auch kommt bei der betrachteten Wank- oder Nickstabilisierung der Fehlerbescherrschbarkeit für die Vorderachse VA' erhöhte Bedeutung zu, da regelmäßig dies die Achse ist, die für die Lenk-Ansteuerung des Fahrzeuges eingesetzt ist.

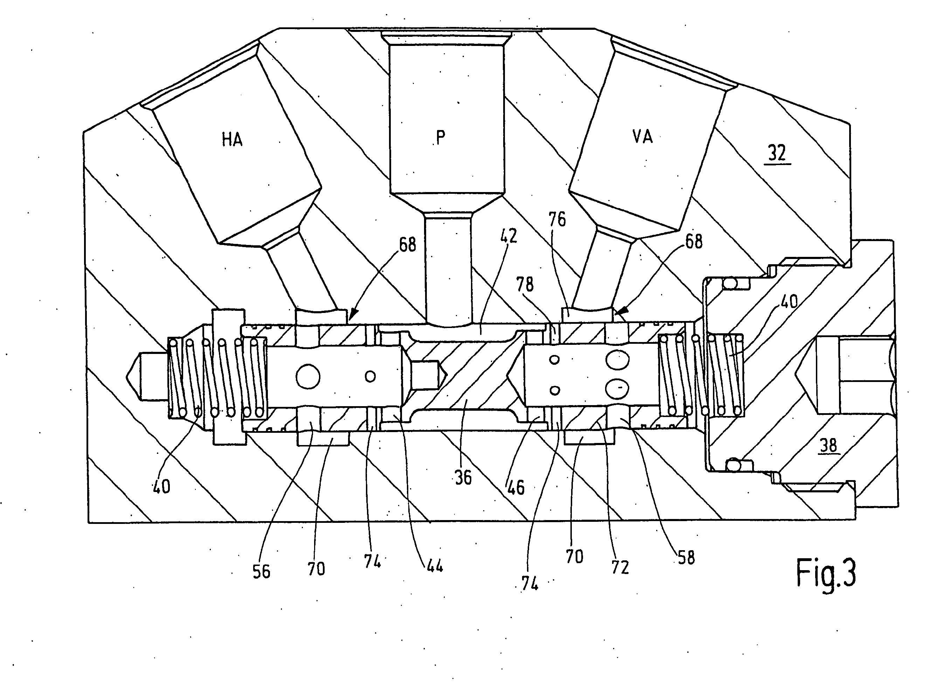

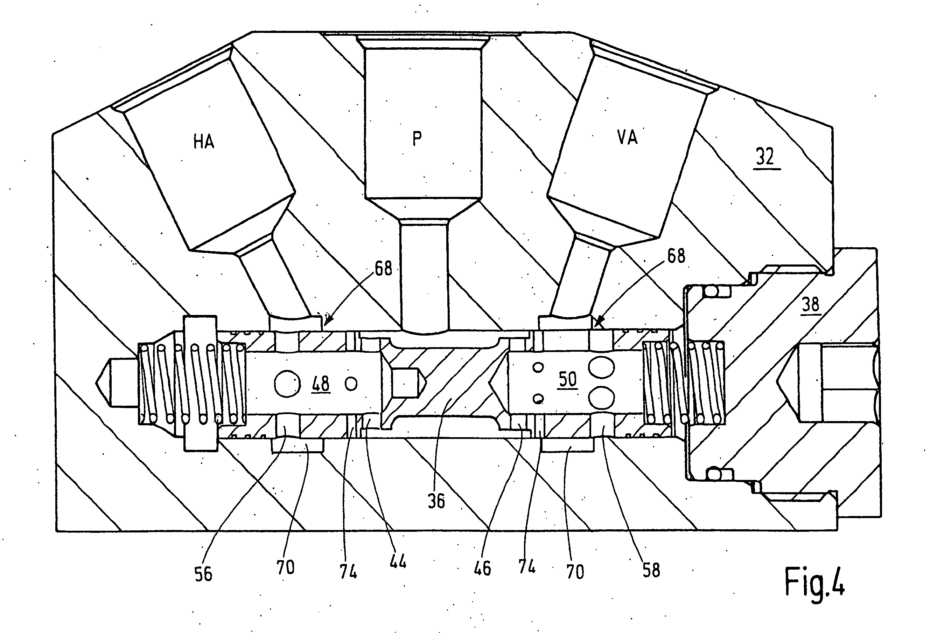

Die Stromteilervorrichtung nach den Fig.3 bis 5 ist von den Grundzügen her vergleichbar der bekannten Stromteilervorrichtung nach der Fig.2 aufgebaut, so dass die erfindungsgemäße Stromteilervorrichtung nur noch insoweit erläutert wird, als sie sich erfindungsgemäß von der Lösung nach der Fig.2 unterscheidet. Besondere Bedeutung kommt hierbei für die erfindungsgemäße Lösung der als Ganzes mit 68 bezeichneten Sicherheitseinrichtung zu. Die Sicherheitseinrichtung 68 weist unter anderem einen im Ventilgehäuse 32 umlaufenden Ringkanal 70 auf, der fluidführend mit dem Nutzanschluß VA in Verbindung steht. Die Länge des Ringkanals 70 parallel zur möglichen Verfahrrichtung des Steuerkolbens 36 gesehen ist im Gegensatz zu den bekannten Ringkanälen 60,62 jedenfalls so lang bemessen, dass mit einem vorgebbaren Überstand ein Wandabschnitt 72 im Steuerkolben 36 übergriffen ist. Der angesprochene Wandabschnitt 72 ist in Blickrichtung auf die Fig.3 gesehen von der weiteren Querbohrungsreihe 58 durchgriffen sowie am linken Rand von einer dritten Querbohrungsreihe 74, an die sich wiederum die bereits vorgestellte Querbohrungsreihe 46
anschließt, die in dauernder Fluidverbindung mit dem Druckversorgungsanschluß P steht. Die wirksamen Flächen in Form der gewählten Durchmesser der Einzelbohrungen für die Querbohrungsreihe 58 ist größer als die der Querbohrungsreihe 46, die wiederum größer ist als der Durchmesser der dritten Querbohrungsreihe 74. Die dritte Querbohrungsreihe 74 bildet eine Art Konstantbohrung aus, die als Teil der Sicherheitseinrichtung 68 zur Druckminderung mit beiträgt. Die Querbohrungsreihe 58 wiederum bildet die eigentliche Regelblende des Stromteilers aus und die Querbohrungsreihe 46 bildet eine sogenannte Meßblende der Sicherheitseinrichtung 68 aus. Solange der volle Fluidstrom durch Raum 50 oder 48 des Steuerkolbens 36 fließt, kann eine Druckabsenkung realisiert sein. Fließt hingegen ein Teilvolumenstrom von der Ringausnehmung 42 beispielsweise direkt zum Ringkanal 70, kann eine Druckbegrenzungsfunktion realisiert sein. Der in der Länge erweiterte, insbesondere auf den Lochabstand 78,58 abgestimmte Ringkanal 70 ist somit Teil eines fluidführenden Bypasses 76, der mit einem weiteren Bypass 78 zusammenwirkt, sobald der zugeordnete Wandabschnitt 72 derart unter den Ringkanal 70 einfährt, dass der Steuerkolben 36 aus seiner in der Fig.3 gezeigten Regelposition in Blickrichtung auf die Figuren gesehen nach rechts in den Bereich der realisierten Sicherheitsfunktion nach der Fig. 4 fährt, bei der sowohl die Querbohrungsreihe 58 als auch die dritte Querbohrungsreihe 74 in fluidführender Verbindung, bei gegensinnig wirkender Öffnungsfläche mit dem Nutzanschluß VA steht, wobei eine permanente weitere Druckversorgung über den Druckversorgungsanschluß P und die erste Querbohrungsreihe 46 in die Ausnehmung 50 des Steuerkolbens 36 sichergestellt ist.

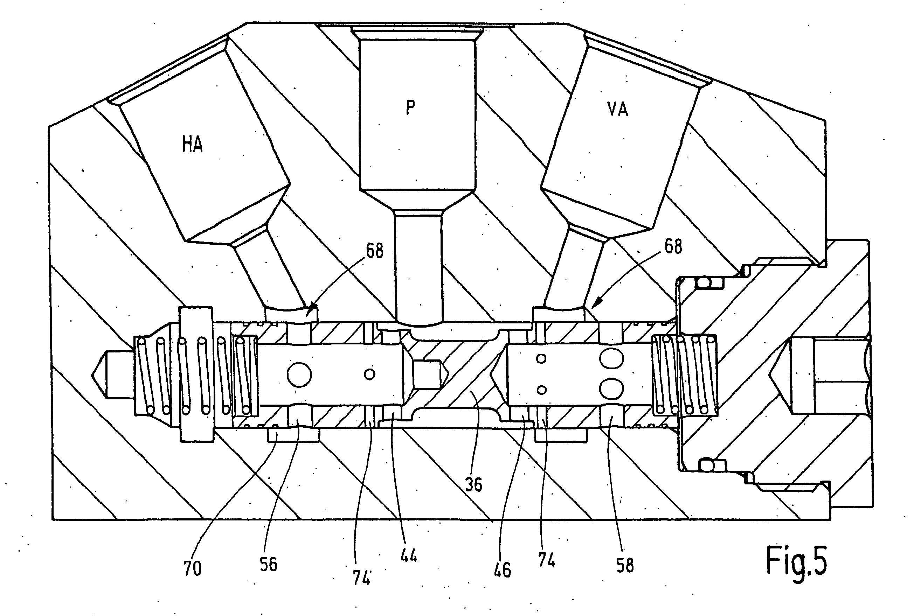

Während die Fig.3 die Regelposition der Stromteilervorrichtung betrifft, kommt es zu der Sicherheitsfunktion nach der Fig.4, wenn im Versagensfall für den Nutzanschluß HA die Fluidversorgung unterbrochen oder doch zumindest teilweise gehemmt ist. Innerhalb des genannten Regelbereichs nach der Fig.3 dient also die dort gezeigte Stromteilervorrichtung als üblicher Volumen-Stromteiler. Kommt es aufgrund des Versagensfalles zu einem Druckanstieg zwischen den Nutzanschlüssen HA und VA, wird durch Verschiebung des Steuerkolbens 36 nach rechts die eigentliche Regelbohrung, gebildet aus der weiteren Querbohrungsreihe 58, zusehends geschlossen, wobei die Druckminderung für den Nutzanschluß HA dann über die Konstantbohrung in Form der dritten Querbohrungsreihe 74 erfolgt. Die dahingehend vollständig abgeregelte Situation ist in der Fig.5 wiedergegeben, wobei der Steuerkolben 36 noch weiter gegen die rechte Steuerfeder 40 verschoben in seine Anschlagposition kommt, bei der das rechte stirnseitige Ende des Steuerkolbens 36 an die Verschlußschraube 38 anschlägt und der zuordenbare Volumenstrom gelangt über den Druckversorgungsanschluß P an den verbleibenden Nutzanschluß VA. Nach der erfindungsgemäßen Lösung wird insoweit die Flächenöffnungsfunktion für die Regelbohrung in Form der Querbohrungsreihe 58 um einen bistabilen oder im regelungstechnischen Sinne instabilen Anteil in Form der Querbohrungsreihe 74 erweitert, wobei die individuelle Einstellung des Druckschaltpunktes über die Position der Konstantbohrung in Form der dritten Querbohrungsreihe 74 zu 58 in Bezug auf Ringkanal 70 erfolgt.

Fällt die Druckdifferenz von Nutzanschluß HA zu Nutzanschluß VA unter einen vorgegebenen Wert, beispielsweise 10 bar od. dgl., fährt der Steuerkolben 36 wieder zurück in seine Regelstellung nach der Fig.3. Die erfindungsgemäße Stromteilervorrichtung kommt zur Realisierung des aufgezeigten Fail-Safe-Falles ohne zusätzliche Teile aus und im Fail-Safe-Fall tritt im übrigen nur ein geringer Druckabfall auf, was sich energetisch günstig für die Gesamtanordnung erweist. Da bei der Ausführungsform der Stromteilervorrichtung bezogen auf den Steuerkolben 36 die Ventilfunktion symmetrisch aufgebaut ist; insbesondere der linke Steuerkolbenbereich gleichfalls eine Konstantbohrung in Form der dritten Querbohrungsreihe 74 aufweist, ist insoweit auch im umgekehrten Fall die entsprechende Fail-Safe-Lösung realisiert, wenn das Fluidentnahmeverhalten am Nutzanschluß VA gestört ist. Die bisherigen Ausführungen der insoweit für den Nutzanschluß VA erläuterten Sicherheitseinrichtung 68 gelten dann auch für den Nutzanschluß HA.

Als negative Überdeckung im Sinne der erfindungsgemäßen Lösung wird dabei angesehen, wenn die dritte Querbohrungsreihe 74, mit zunehmender Öffnungscharakteristik unter den jeweils zuordenbaren Ringkanal 70 einfährt bzw. die zweite Querbohrungsreihe 58 oder 56 aus dem zuordenbaren Ringkanal 70 ausfahrend abgedrosselt wird, so dass beide teilweise in der geöffneten Stellung sich befinden. Mit der gezeigten Lösung nach den Fig.3 bis 5 kommt man zu einer wirksamen Druckminderung auf einen vorgebbaren Minimaldruck im Versagensfall.

Die vorstehend beschriebene Lösung nach den Fig.3 bis 5 ist gemäß Darstellung nach der Fig.6 in Patronenbauweise realisiert, wobei man die dahingehende Bauweise fachsprachlich auch mit Cartridge-Ventilanordnung bezeichnet. Ferner ist die Konstantbohrung 74 bei dem Ausführungsbeispiel nach der Fig. 6 nur im Bereich des Nutzanschlusses VA vorgesehen und nicht für den Nutzanschluß HA. Insoweit deckt also diese Ausführungsform nur den Versagensfall bei dem Nutzanschluß HA ab. Wie die Darstellung nach der Fig. 6 weiter zeigt, ist für den Erhalt der Patronenbauweise zwischen dem längsverschiebbaren Steuerkolben 36 und dem eigentlichen Ventilgehäuse 32 noch ein Zwischengehäuseteil 80 eingesetzt, das Querbohrungen 82,84 und 86 aufweist, wobei die Querbohrung 82 dem Grund nach die Funktion des vorher beschriebenen Ringkanals 70 übernimmt, um sicherzustellen, dass im Versagensfall bei dem Nutzanschluß HA und zur linken Seite hin bewegtem Steuerkolben 36 die Querbohrungsreihe 58 vom Fluiddurchfluß her abgeregelt wird und die Konstantbohrung in Form der Querbohrungsreihe 74 mit vergrößertem Fluidquerschnitt an den Nutzanschluß VA angeschlossen ist. Die Druckpermanentversorgung wird wiederum über die Druckversorgungsquelle P, die Querbohrungen 84 sowie die Querbohrungsreihe 46 über die Ausnehmung 50 im Steuerkolben 36 sichergestellt. Außenumfangsseitig sind am Zwischengehäuseteil 80 ringnutförmige Ausnehmungen 88 gebildet, in die die Fluidanschlüsse VA, P und HA fluidführend eingreifen. Ansonsten ist die Funktionsweise gleich zu der vorstehend beschriebenen Funktionsweise für den verbleibenden Nutzanschluß VA, sofern die Fluidversorgung am Nutzanschluß HA unterbrochen ist.

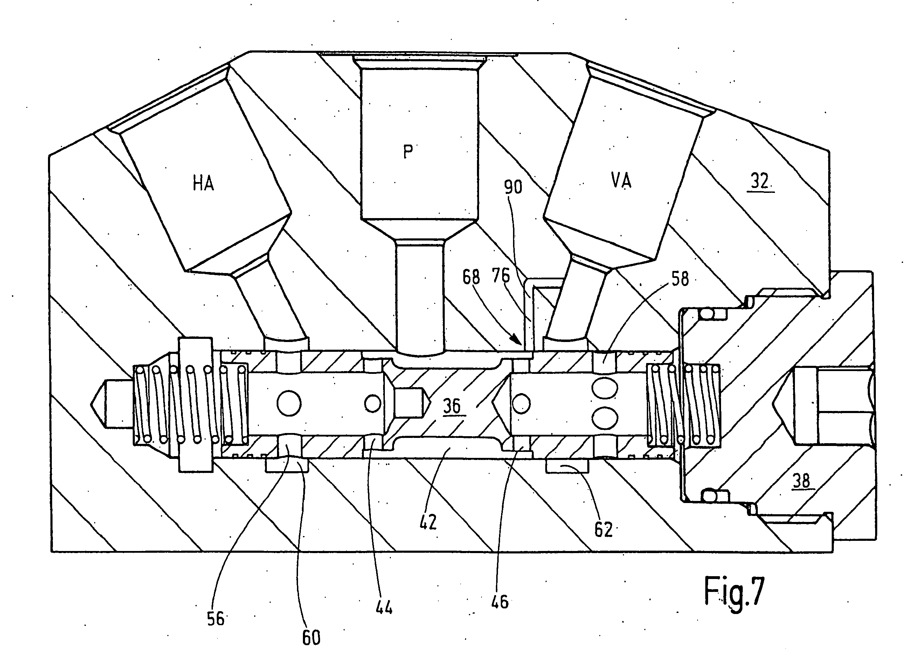

Die Ausführungsform nach der Fig.7 geht zunächst wieder von dem grundsätzlichen Ventilaufbau nach dem Stand der Technik gemäß Fig.2 aus. Im übrigen stellt die Fig.7 eine Druckbegrenzungs-Lösung gegenüber den bisherigen Druckminder-Ausgestaltungen nach den Fig.3 bis 6 dar, wobei die Lösung auch insoweit vereinfacht ist, als sie wiederum nur den beschriebenen Versagensfall am Nutzanschluß HA abdeckt. Als Bypass 76 der Sicherheitseinrichtung 68 kommt diesmal eine fluidführende Verbindungsleitung 90 im Ventilgehäuse 32 zum Einsatz. Auch die dahingehende Ventilgestaltung realisiert wiederum eine Art negative Überdeckung, d.h. fährt im Versagensfall bei Nutzanschluß HA in Blickrichtung auf die Fig.7 gesehen der Steuerkolben 36 nach rechts, kommt das untere freie Ende der Verbindungsleitung 90 in zunehmende Überdeckung mit der Ringausnehmung 42, die permanent über den Druckversorgungsanschluß P mit Fluidmedium versorgt ist. Mit zunehmender negativer Überdeckung durch die Verbindungsleitung 90 kommen die fluidführenden Bohrungen der Bohrungsreihe 58 außer Eingriff mit dem Ringkanal 62 und im dahingehenden, in der Fig.7 gezeigten Fall erfolgt dann die Fluid- und Druckversorgung für den Versorgungsanschluß VA ausschließlich über die Verbindungsleitung 90. Hierdurch ist eine Art Druckbegrenzungsventil realisiert, das Überlastungsspitzen im hydraulischen Kreis vermeidet. Auch hier wäre es dem Grunde nach denkbar, eine vergleichbare Verbindungsleitungseinrichtung für den Nutzanschluß HA vorzusehen, um einen möglichen Versagensfall für den Nutzanschluß VA mit abdecken zu können. Die Verbindungsleitung 90 gemäß der Darstellung nach der Fig.7 läßt sich in der Art einer Schrägbohrung (nicht dargestellt) einfacher fertigen; die gewählte 90°-Anordnung läßt sich aber gleichfalls über anschließend zu verschließende Blindbohrungskanäle gleichfalls realisieren.

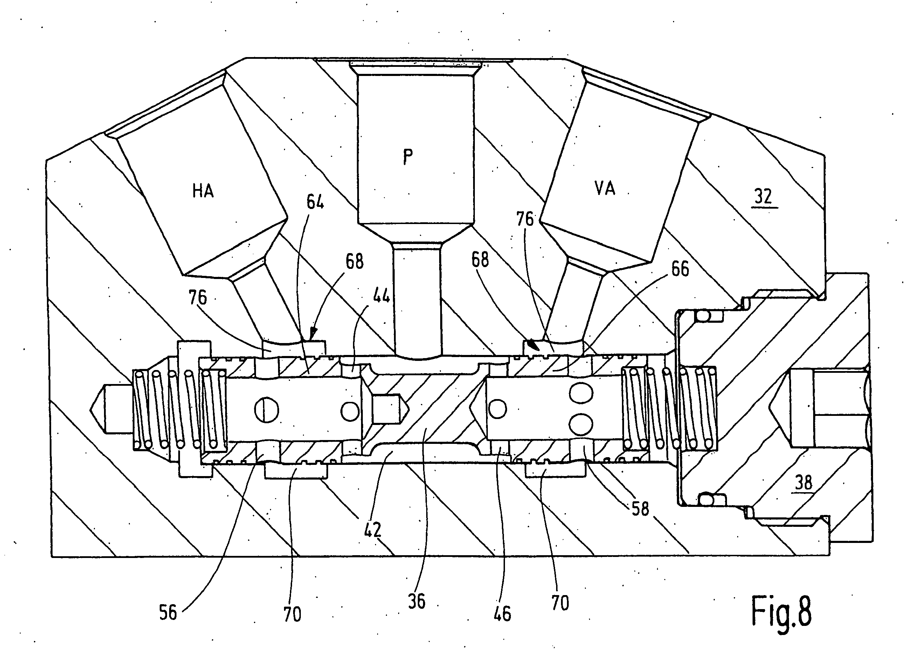

Die weitere Ausführungsform nach der Fig.8 zeigt eine Lösung mit Druckbegrenzungsfunktion mit einem wiederum in der Länge an die Gegebenheiten angepaßten Ringkanal 70 gemäß der Darstellung für die Ausführungsform nach den Fig.3 bis 5. Der insoweit gebildete Bypass 76 erlaubt mittels des Ringkanals 70 wiederum eine "negative" Überdeckung von Ringausnehmung 42 mit Querbohrungsreihe 58, sofern sich der Steuerkolben 36 in Blickrichtung auf die Fig.8 gesehen in eine rechte Auslenkstellung bewegt. Insoweit ist wieder der Versagensfall für den Nutzanschluß HA abgedeckt. Aufgrund des symmetrischen Aufbaues, bezogen auf den Steuerkolben 36, deckt die Ausführungsform nach der Fig.8 aber auch den Versagensfall am Nutzanschluß VA über die linke Steuerseite des Steuerkolbens 36 für den Nutzanschluß HA mit ab. Bei der aufgezeigten Lösung nach der Fig.8 ist eine entsprechend hohe Toleranzgenauigkeit notwendig im Hinblick auf die austretenden Steuerkanten der Querbohrungsreihen 44,46 und 56,58 bezogen auf die Länge des Ringkanals 70 nebst innen liegendem Wandabschnitt 66 bzw. 64.

Die Fig.9 zeigt eine besonders bevorzugte Ausgestaltung für eine Ventillösung mit Druckabsenkungsfunktion, vergleichbar der Lösung nach der Fig.3. Insoweit werden wiederum dieselben Bezugszeichen für die vorliegende Lösung nach der Fig.9 verwendet. Die bisher getroffenen Ausführungen gelten dann auch insoweit für die dahingehende nachfolgend beschriebene Lösung.

Wie die Darstellung nach der Fig.9 zeigt, ist zu den bisher aufgezeigten Querbohrungsreihen noch eine weitere Querbohrungsreihe 92 als Konstantbohrungsreihe mit hinzugekommen. Diese weitere Querbohrungsreihe 92 erstreckt sich innerhalb des Steuerkolbens 36 zwischen der Querbohrungsreihe 74 und der Querbohrungsreihe 58. Die freie Öffnungsfläche der Querbohrungsreihe 92 ist dabei kleiner gewählt als die freien Querschnittsflächen der Querbohrungsreihen 58 und 74. Im Ausgangszustand nach der Fig.9 mündet die Querbohrungsreihe 92 in den Ringkanal 76 ein. Kommt der Steuerschieber 36 in Blickrichtung auf die Fig.9 gesehen in seine ganz rechte Anschlagstellung und mithin in Anlage zu der freien Stirnseite der Verschlußschraube 38, ist sowohl die Querbohrungsreihe 74 als auch die Querbohrungsreihe 92 vollflächig in Anlage und mithin in Überdeckung mit dem Ringkanal 76. Die Querbohrungsreihe 58 gerät insoweit völlig außer Eingriff mit dem Ringkanal 76 und ist in dieser rechten Anschlagstellung von Gehäuseteilen des Gehäuses 32 abgedeckt. Mit der Lösung nach der Fig.9 kommt man wiederum zu einer wirksamen Druckminderung auf einen vorgebbaren Minimaldruck im Versagensfall, wobei nunmehr, bedingt durch die weitere Querbohrungsreihe 92, etwaige Fertigungstoleranzen an den Ventilkomponenten der Stromteilervorrichtung praktisch keine Rolle mehr spielen, da unabhängig von der Toleranzsituation der Druckschaltpunkt über den jeweiligen freien Querschnitt der Konstantbohrung 92 in Form der vierten Querbohrungsreihe 92 definiert ist und nicht mehr über die Länge von Bypass 76 zur Position von Querbohrungsreihe 74 zu Querbohrungsreihe 58.

Sofern man die dahingehende Toleranzunabhängigkeit auch für die sonstigen Lösungen nach den Fig.3ff erreichen möchte, wäre dann in jedem Fall eine weitere vierte Querbohrungsreihe 92 im Steuerkolben 36 zwischen Querbohrungsreihe 74 und Querbohrungsreihe 58 vorzusehen.

## Patentansprüche

1. Stromteilervorrichtung mit mindestens einem Druckversorgungsanschluß (P) und mindestens zwei Nutzanschlüssen (HA,VA) und einem zumindest die jeweiligen Nutzanschlüsse (HA,VA) ansteuerbaren Steuerkolben (36), der nach einem vorgebbaren Verhältnis den über den Druckversorgungsanschluß (P) zuführbaren Volumenstrom zwischen den Nutzanschlüssen (HA, VA) in der Art einer Druckwaage regelnd aufteilt, wobei im Versagensfall betreffend zumindest einen Nutzanschluß (HA) mittels einer Sicherheitseinrichtung (68) unter Einsatz des Steuerkolbens (36) für den jeweils verbleibenden Nutzanschluß (VA) eine Druckbegrenzung oder Druckabschaltung vorgesehen ist, wobei eine Ausnehmung (50) des Steuerkolbens (36) eine Verbindungsstelle (46) zu dem Druckversorgungsanschluss (P) aufweist, **dadurch gekennzeichnet, dass** in der Ausnehmung (50) zusätzlich zu der Verbindungsstelle (46) drei Querbohrungsreihen (58, 74, 92) vorgesehen sind.

2. Stromteilervorrichtung nach Anspruch 1, **dadurch gekennzeichnet, dass** die Sicherheitseinrichtung (68) mindestens einen Bypass (76) aufweist, der im Versagensfall mittels des Steuerkolbens (36) zunehmend eine Fluidverbindung zwischen dem Druckversorgungsanschluß (P) und dem jeweils verbleibenden Nutzanschluß (VA) herstellt.

3. Stromteilervorrichtung nach Anspruch 2, **dadurch gekennzeichnet, dass** der Bypass (76) mindestens eine fluidführende Verbindungsleitung (90) zwischen einer Ringausnehmung (42) im Steuerkolben (36) und dem jeweils zuordenbaren verbleibenden Nutzanschluß (VA) aufweist, wobei in jeder Verfahrstellung des Steuerkolbens (36) die Ringausnehmung (42) an den Druckversorgungsanschluß (P) angeschlossen bleibt.

4. Stromteilervorrichtung nach Anspruch 2, **dadurch gekennzeichnet, dass** der Bypass (76) mindestens eine fluidführende Radialausnehmung (70) in Wandteilen eines Ventilgehäuses (32) für den Steuerkolben (36) aufweist, die mit zunehmender Zusteuerung des jeweils zuordenbaren verbleibenden Nutzanschlusses (VA) durch den Steuerkolben (36) eine sich vergrößernde Fluiddurchtrittsstelle für Fluid in Richtung dieses verbleibenden Nutzanschlusses (VA) bildet.

5. Stromteilervorrichtung nach einem der Ansprüche 1 bis 4, **dadurch gekennzeichnet, dass** der jeweilige Bypass (76) mit einem weiteren Bypass (78) derart zusammenwirkt, dass mit zunehmender Zusteuerung des jeweils zuordenbaren verbleibenden Nutzanschlusses (VA) durch den Steuerkolben (36) eine sich vergrößernde Fluiddurchtrittsstelle in Richtung dieses verbleibenden Nutzanschlusses (VA) durch den weiteren Bypass (78) ergibt.

6. Stromteilervorrichtung nach Anspruch 5, **dadurch gekennzeichnet, dass** der weitere Bypass (78) als Bestandteil des Steuerkolbens (36) Fluidöffnungen (74) in diesem aufweist, deren jeweiliger freier Querschnitt kleiner ist als derjenige benachbarter Querschnitte von Verbindungsstellen (44,46) zu dem Druckversorgungsanschluß (P) und dem jeweils verbleibenden Nutzanschluß (VA).

7. Stromteilervorrichtung nach einem der Ansprüche 1 bis 6, **dadurch gekennzeichnet, dass** der Steuerkolben (36) von zwei Steuerfedern (40) zentriert in eine Ausgangsstellung bringbar ist, und dass der Steuerkolben (36) an seinen gegenüberliegenden Enden eine Ausnehmung (48,50) aufweist, die in jeder Verfahrstellung des Steuerkolbens (36) fluidführend in Verbindung mit dem Druckversorgungsanschluß (P) sind und die jeweils zu ihren freien Enden hin in einen Steuerraum (52,54) münden, in dem nahezu jeweils der Druck des Druckversorgungsanschlusses (P) herrscht.

8. Stromteilervorrichtung nach einem der Ansprüche 1 bis 7, **dadurch gekennzeichnet, dass** ihre Ventilteile in einem Ventilgehäuse (32) unmittelbar integriert oder in der Art einer Patronenbauweise (Cartridge) ausgeführt sind.

9. Stromteilervorrichtung mit mindestens einem Druckversorgungsanschluß (P) und mindestens zwei Nutzanschlüssen (HA,VA) und einem zumindest die jeweiligen Nutzanschlüsse (HA,VA) ansteuerbaren Steuerkolben (36), der nach einem vorgebbaren Verhältnis den über den Druckversorgungsanschluß (P) zuführbaren Volumenstrom zwischen den Nutzanschlüssen (HA, VA) in der Art einer Druckwaage regelnd aufteilt, wobei im Versagensfall betreffend zumindest einen Nutzanschluß (HA) mittels einer Sicherheitseinrichtung (68) unter Einsatz des Steuerkolbens (36) für den jeweils verbleibenden Nutzanschluß (VA) eine Druckbegrenzung oder Druckabschaltung vorgesehen ist, **dadurch gekennzeichnet, dass** eine variable Regelblende in einen konstanten Teil, vorzugsweise gebildet durch ein Zwischengehäuseteil (80), das Querbohrungen (82,84,86) aufweist, und in einen variablen Teil, vorzugsweise gebildet aus einer Querbohrungsreihe (58) im Steuerkolben (36), aufgeteilt ist.

10. Versorgungseinrichtung für mindestens zwei hydraulische Verbraucher (HA', VA'), die über jeweils einen hydraulischen Steuerkreis (12,10) an einen zuordenbaren Nutzanschluß (HA,VA) einer Stromteilervorrichtung nach einem der Ansprüche 1 bis 9 angeschlossen sind, und dass eine hydraulische Druckversorgung (P') mit variablem Leistungsvermögen an den Druckversorgungsanschluß (P) der Stromteilervorrichtung angeschlossen ist.

11. Versorgungseinrichtung nach Anspruch 10, **dadurch gekennzeichnet, dass** sie als Stabilisierungseinrichtung für ein mehrachsiges Fahrzeug dient mit je einem hydraulischen Steuerkreis (10,12) für eine Vorder-(VA') und eine Hinterachse (HA').

## Claims

1. A current divider apparatus comprising at least one pressure supply port (P) and at least two working ports (HA, VA) and a control piston (36) that can activate at least the respective working ports (HA, VA) and that divides volumetric flow that can be supplied via the pressure supply port (P) between the working ports (HA, VA) in a pre-definable ratio in the manner of a pressure compensator, in the event of failure relating to at least one working port (HA) a pressure limitation or pressure shut-off being provided by means of a safety device (68) using the control piston (36) for the respectively remaining working port (VA), a recess (50) of the control piston (36) having a connection point (46) to the pressure supply port (P), **characterised in that** three rows of transverse holes (58, 74, 92) are provided in the recess (50) in addition to the connection point (46).

2. The current divider apparatus according to Claim 1, **characterised in that** the safety device (68) has at least one bypass (76) which in the event of failure increasingly produces a fluid connection between the pressure supply port (P) and the respectively remaining working port (VA) by means of the control piston (36).

3. The current divider apparatus according to Claim 2, **characterised in that** the bypass (76) has at least one fluid-conveying connection line (90) between an annular recess (42) in the control piston (36) and the respectively assignable remaining working port (VA), in every movement position of the control piston (36) the annular recess (42) remaining connected to the pressure supply port (P).

4. The current divider apparatus according to Claim 2, **characterised in that** the bypass (76) has at least one fluid-conveying radial recess (70) in wall parts of a valve housing (32) for the control piston (36) which forms an expanding fluid passage point for fluid in the direction of this remaining working port (VA) as the respectively assignable remaining working port (VA) is increasingly activated by the control piston (36).

5. The current divider apparatus according to any of Claims 1 to 4, **characterised in that** the respective bypass (76) co-operates with a further bypass (78) such that an expanding fluid passage point in the direction of this remaining working port (VA) is produced by the further bypass (78) as the activation of the respectively assignable remaining working port (VA) by the control piston (36) increases.

6. The current divider apparatus according to Claim 5, **characterised in that** the further bypass (78), as a component part of the control piston (36), has fluid openings (74) in the latter, the respective free cross-section of which is smaller than that of adjacent cross-sections of connection points (44, 46) to the pressure supply port (P) and the respectively remaining working port (VA).

7. The current divider apparatus according to any of Claims 1 to 6, **characterised in that** the control piston (36), centred by two control springs (40), can be brought into a starting position, and that the control piston (36) has on its opposite ends a recess (48, 50) which in every movement position of the control piston (36) are connected such as to convey fluid to the pressure supply port (P) and which respectively discharge at their free ends into a control space (52, 54) in which almost the pressure of the pressure supply port (P) respectively prevails.

8. The current divider apparatus according to any of Claims 1 to 7, **characterised in that** their valve parts are directly integrated into a valve housing (32) or are designed in the manner of a cartridge.

9. The current divider apparatus comprising at least one pressure supply port (P) and at least two working ports (HA, VA) and a control piston (36) that can activate at least the respective working ports (HA, VA) and that divides volumetric flow that can be supplied via the pressure supply port (P) between the working ports (HA, VA) in a pre-definable ratio in the manner of a pressure compensator, in the event of failure relating to at least one working port (HA) a pressure limitation or pressure shut-off being provided by means of a safety device (68) using the control piston (36) for the respectively remaining working port (VA), **characterised in that** a variable control aperture is divided into a constant part, preferably formed by an intermediate housing part (80) that has transverse bore holes (82, 84, 86) and into a variable part, preferably formed from a row of transverse bore holes (58) in the control piston (36).

10. A supply device for at least two hydraulic consumers (HA', VA') which are respectively connected by a hydraulic control circuit (12, 10) to an assignable working port (HA, VA) of a current divider apparatus according to any of Claims 1 to 9, and that a hydraulic pressure supply (P') is connected with a variable power capacity to the pressure supply port (P) of the current divider apparatus.

11. The supply device according to Claim 10, **characterised in that** it serves as a stabilising device for a multi-axle vehicle having one respective hydraulic control circuit (10, 12) for a front (VA') and a rear axle (HA').

## Revendications

1. Dispositif formant répartiteur de courant, comprenant au moins un raccord (P) d'alimentation en pression et au moins deux raccords (HA,VA) utiles et un piston (36) de commande, qui peut commander au moins les raccords (HA,VA) utiles respectifs et qui répartit en régulation, à la manière d'une bascule manométrique, entre les raccords (HA,VA) utiles le courant en volume pouvant être apporté suivant un rapport pouvant être prescrit par l'intermédiaire du raccord (P) d'alimentation en pression, dans lequel, en cas de défaillance concernant au moins un raccord (HA) utile, il est prévu, au moyen d'un dispositif (68) de sécurité en utilisant le piston (36) de commande pour le raccord (VA) utile, une limitation de pression ou une interruption de pression, un évidement (50) du piston (36) de commande ayant un point (46) de liaison au raccord (P) d'alimentation en pression, **caractérisé en ce qu'**il est prévu, dans l'évidement (50) supplémentairement au point (46) de liaison, trois rangées (58,74,92) de trous transversaux.

2. Dispositif formant répartiteur de courant suivant la revendication 1,
**caractérisé en ce que** le dispositif (68) de sécurité a au moins une dérivation (76) qui, en cas de défaillance, ménage au moyen du piston (36) de commande, d'une manière croissante, une liaison fluidique entre le raccord (P) d'alimentation en pression et le raccord (VA) utile restant respectivement.

3. Dispositif formant répartiteur de courant suivant la revendication 2,
**caractérisé, en ce que** la dérivation (76) a au moins un conduit (90) de liaison fluidique entre un évidement (42) annulaire du piston (36) de commande et le raccord (VA) utile restant pouvant être associé respectivement, dans lequel, dans chaque position de déplacement du piston (36) de commande, l'évidement (42) annulaire reste raccordé au raccord (P) d'alimentation en pression.

4. Dispositif formant répartiteur de courant suivant la revendication 2,
**caractérisé en ce que** le raccord (76) a au moins un évidement (70) radial fluidique dans des parties de paroi d'un corps (32) de vanne pour le piston (36) de commande qui, au fur et à mesure qu'augmente la commande du raccord (VA) utile restant pouvant être associé respectivement par le piston (36) de commande, forme un point de passage grandissant pour du fluide dans la direction de ce raccord (VA) utile restant.

5. Dispositif formant répartiteur de courant suivant l'une des revendications 1 à 4,
**caractérisé en ce que** la dérivation (76) respective coopère avec une autre dérivation (78) de manière à ce que, au fur et à mesure qu'augmente la commande du raccord (VA) utile restant pouvant être associé respectivement par le piston (36) de commande, cela donne, par l'autre dérivation (78), un point de passage de fluide grandissant dans la direction de ce raccord (VA) utile restant.

6. Dispositif formant répartiteur de courant suivant la revendication 5,
**caractérisé en ce que** l'autre dérivation (78) a, comme partie constitutive du piston (38) de commande, des ouvertures (74) pour du fluide qui sont y ménagées et dont la section transversale libre respective est plus petite que les sections transversales voisines des points (44,46) de liaison au raccord (P) d'alimentation en pression et au raccord (VA) utile restant respectivement.

7. Dispositif formant répartiteur de courant suivant l'une des revendications 1 à 6,
**caractérisé en ce que** le piston (36) de commande peut être mis de manière centrée par deux ressorts (40) de commande dans une position initiale et **en ce que** le piston (36) de commande a, à son extrémité opposée, un évidement (48,50) qui, dans chaque position de déplacement du piston (36) de commande, est en communication fluidique avec le raccord (P) d'alimentation en pression et qui débouche respectivement à son extrémité libre dans une chambre (52,54) de commande dans laquelle règne à peu près respectivement la pression du raccord (P) d'alimentation en pression.

8. Dispositif formant répartiteur de courant suivant l'une des revendications 1 à 7,
**caractérisé en ce que** ses parties de vanne sont intégrées directement dans un corps (32) de vanne ou sont réalisées à la manière d'une construction en cartouche (cartridge).

9. Dispositif formant répartiteur de courant, comprenant au moins un raccord (P) d'alimentation en pression et au moins deux raccords (HA,VA) utiles et un piston (36) de commande, qui peut commander au moins les raccords (HA,VA) utiles respectifs et qui répartit en régulation, à la manière d'une bascule manométrique, entre les raccords (HA,VA) utiles le courant en volume pouvant être apporté suivant un rapport pouvant être prescrit par l'intermédiaire du raccord (P) d'alimentation en pression, dans lequel, en cas de défaillance concernant au moins un raccord (HA) utile, il est prévu, au moyen d'un dispositif (68) de sécurité, en utilisant le piston (36) de commande pour le raccord (VA) utile, une limitation de pression ou une interruption de pression, **caractérisé en ce qu'**un diaphragme de réglage est subdivisé en une partie constante, formée de préférence, par une partie (80) intermédiaire du corps qui a des trous (82,84,86) transversaux, et en une partie variable, formée de préférence d'une rangée (58) de trous transversaux du piston (36) de commande.

10. Dispositif d'alimentation d'au moins deux consommateurs (HA',VA') hydrauliques qui sont raccordés par respectivement un circuit (12,10) hydraulique de commande à un raccord (HA,VA) utile pouvant être associé d'un dispositif formant répartiteur de courant suivant l'une des revendications 1 à 9 et en ce qu'une alimentation (P') en pression hydraulique de puissance variable est raccordée au raccord (P) d'alimentation en pression du dispositif formant répartiteur de courant.

11. Dispositif d'alimentation suivant la revendication 10, **caractérisé en ce qu'**il sert de dispositif de stabilisation pour un véhicule à plusieurs essieux, ayant respectivement un circuit (10,12) hydraulique de commande d'un essieu (VA') avant et d'un essieu (HA') arrière.
